# EUROPÄISCHE PATENTSCHRIFT

(11) **EP 1 722 150 B1**
(45) Veröffentlichungstag und Bekanntmachung des Hinweises auf die Patenterteilung: **01.10.2008**
(21) Anmeldenummer: 06002981.6
(22) Anmeldetag: 15.02.2006
(51) Int. Cl.: F16N 7/38, B65G 45/08

(54) **Abschmiereinrichtung**
Lubrication device
Dispositif de lubrification

(30) Priorität: 06.05.2005 DE 202005007238 U; 22.10.2005 DE 202005016589 U
(43) Veröffentlichungstag der Anmeldung: 15.11.2006
(73) Patentinhaber: Lincoln GmbH, 69190 Walldorf (DE)
(72) Erfinder: Paluncic, Zdravko, Dr.-Ing., 67067 Ludwigshafen (DE); Rodemer, Karl, 69126 Heidelberg (DE)
(74) Vertreter: KEIL & SCHAAFHAUSEN Patentanwälte

(56) Entgegenhaltungen:
- EP-A- 0 590 215
- EP-A- 1 363 063
- DE-U1- 20 312 833
- FR-A- 2 697 072
- GB-A- 2 104 163
- GB-A- 2 212 568
- US-A- 4 648 486
- US-A1- 2004 178 019

## Beschreibung

Die Erfindung bezieht sich auf eine Einrichtung zum Abschmieren wandernder Schmierstellen, z.B. an einem Rollen- oder Ketten band , bei welcher ein Schmierkopf aus einer zurückgezogenen Ausgangsruhelage in eine vorgeschobene Arbeitslage bewegbar ist, in welch letzterer der Schmierkopf dichtend an mindestens einer Schmierstelle zur Abgabe von Schmierstoff anliegt.

Eine derartige Einrichtung ist bspw. aus der DE 203 12 833 U1 bekannt. Diese hat einen einzigen Schmierkopf mit einer einzigen Schmierstoffaustrittsöffnung, wodurch für jede Schmierstelle, welche einen unterschiedlichen Abstand von einem Mitnehmer haben, welcher an einer bestimmten Stelle in das zu schmierende Rollen- oder Kettenband eingreift, eine eigene Abschmiereinrichtung erfordert.

Abschmiereinrichtungen mit zwei nebeneinander angeordneten Schmierstoffauslässen zum Aufsprühen eines Schmierstoffes sind bspw. aus der GB 2 104 163 A und der US 4,648,486 bekannt.

Aufgabe der vorliegenden Erfindung ist es, eine Abschmiereinrichtung der bekannten Art vielseitiger einsetzbar zu machen und insbesondere eine bedarfsgerechtere Schmierung zu ermöglichen.

Diese Aufgabe wird bspw. insbesondere eine Einrichtung mit den Merkmalen des Anspruches 1 gelöst.

Die so ausgestaltete Abschmiereinrichtung kann sowohl an Rollen- oder Kettenbändern eingesetzt werden, bei welchen die jeweiligen zu versorgenden Schmierstellen relativ zu dem Eingriffsort eines Mitnehmers der Abschmiereinrichtung den gleichen Abstand voneinander haben, aber auch bei solchen, wo dieser geometrische Abstand unterschiedlich voneinander ist. So ist diese Abschmiereinrichtung z.B. einsetzbar, wenn verschiedene Schmierstellen in geringerem Abstand an ein und demselben Teil eines Rollen- oder Kettenbandes vorgesehen sind, aber auch dann, wenn Schmierstellen in größerem Abstand an unterschiedlichen Teilen des Rollen- oder Kettenbandes, d.h. insbesondere bei unterschiedlicher Teilung an einem solchen Band vorgesehen sind.

Die erfindungsgemäße Abschmiereinrichtung ist dadurch verhältnismäßig einfach im konstruktiven Aufbau, wenn die Mundstücke nebeneinander an einem gemeinsamen Schmierstoffaustrittskörper mit wenigstens einem Schmierkopf vorgesehen sind.

Um die Möglichkeit zu eröffnen, dass den zu versorgenden Schmierstellen gleichzeitig und/oder in unterschiedlichen zeitlichen Abständen geringe Schmierstoffmengen zugeführt werden, ist erfindungsgemäß vorgesehen, dass der wenigstens eine Schmierkopf über einen Schmierstoffverteiler, insbesondere einen Progressivverteiler und/oder einen Einleitungsverteiler, mit dem Schmierstoffvorrat verbunden ist. Diese Kombination von Schmierkopf und Schmiermittelverteiler ist auch dann schon dem Stand der Technik gegenüber überlegen, wenn der eine Schmierkopf nur ein einziges Mundstück aufweist.

Da die zu versorgenden Schmierstellen in unterschiedlichem Abstand, also in unterschiedlichen Ebenen an der Abschmiereinrichtung vorbeigeführt werden können, ist es vorteilhaft, wenn der wenigstens eine Schmierkopf und/oder der jeweilige Schmierstoffaustrittskörper, z.B. mittels Gummipuffer oder dgl. federelastischem Element, schwenkbar nachgiebig an einem z.B. stangenförmigen Schmierkopfhalter, vorzugsweise z.B. mittels einer Schraubverbindung austaushbar gehalten ist. Diese schwenkbar nachgiebige Lagerung sorgt für den entsprechenden Distanzausgleich an den Schmierstellen, so dass der Schmierkopf bzw. der Schmierstoffaustrittskörper immer dichtend zur Anlage an die zu versorgende Schmierstelle kommt. Durch eine ggf. vorgesehene Austauschbarkeit des wenigstens einen Schmierkopfes bzw. des jeweiligen Schmierstoffaustrittskörpers kann dieselbe Abschmiereinrichtung leicht an Rollen- oder Kettenbändern unterschiedlicher Art eingesetzt werden.

Bei der erfindungsgemäßen Abschmiereinrichtung ist ferner vorzugsweise der wenigstens eine Schmierkopf mittels eines Mitnehmers, welcher in das zu schmierende Rollen- oder Kettenband eingreifen kann, aus einer zurückgezogenen Ausgangsruhelage in eine vorgeschobene Arbeitslage überführbar, so dass sich der wenigstens eine Schmierkopf bei dem Abschmiervorgang zwangsläufig mit der gleichen Geschwindigkeit bewegt, wie das Rollen- oder Kettenband.

Wenn dem ggf. dosierbaren, z.B. als Progressiwerteiler ausgebildeten Schmierstoffverteiler ein erster Sensor und ein z.B. als hydraulisches Magnetventil ausgebildetes Einlassventil zugeordnet sind, welchem seine Öffnungszeit von einer Steuereinheit vorgegeben wird, welche ihrerseits als Maß für die Schmierstofffördermenge von den Impulsen des ersten Sensors beaufschlagt wird und an welcher eine vorgegebene Impulszahl einstellbar ist, entfällt die Notwendigkeit einer Dosierung durch den Schmierkopf selbst, da diesem jeweils eine vorgegebene Schmierstoffmenge zugeteilt werden kann.

Es ist aber auch möglich, eine Dosierung dadurch vorzunehmen, dass dem Schmierkopf wenigstens ein Einleitungsverteiler über ein ggf. gemeinsam gesteuertes Entlastungsventil an die Schmierstoffpumpe angeschlossen ist, wobei jedem Mundstück ein Einleitungsverteiler zugeordnet sein kann.

Hierbei ist es zweckmäßig, wenn beim kurzzeitigen Zurückfahren des Mitnehmers der Pumpendruck aufgrund des dem wenigstens einen Einleitungsverteiler zugeordneten Entlastungsventils abfällt und bei Wiedererreichen der Bereitschaftsstellung des Mitnehmers nach einer ggf. über eine Drossel oder Zeitverzögerung verlängerten Entlastungszeit der wenigstens eine Einleitungsverteiler für den nächsten Schmiervorgang wieder aufgeladen ist. Dann steht der volle Pumpendruck bei einem neuen Schmiervorgang schnell zur Verfügung.

Die Schmierstofffördermenge kann dabei an dem wenigstens einem Einleitungsverteiler individuell einstellbar sein.

Ferner kann der wenigstens eine Einleitungsverteiler eine Kontrolleinrichtung, z.B. einen Kontrolistift oder ein Kontrollsignal, aufweisen, welche die Funktion des Einleitungsverteilers optisch und/oder elektrisch anzeigt.

Es ist weiterhin von Vorteil, wenn in Weiterbildung des Erfindungsgedankens der wenigstens eine Schmierkopf bzw. dessen Schmierstoffaustrittskörper, ggf. mechanisch, an ein Austrittsventil andrückbar ist, welches dadurch öffnet und den Schmierstoff an die Schmierstelle freigibt und nach Schmierstoffabgabe sofort wieder schließt. Auf diese Weise kann verhindert werden, dass unerwünscht Schmierstoff nach dem Lösen des Mundstückes von der gerade versorgten Schmierstelle abgegeben wird.

Gemäß einem weiteren fakultativen Erfindungsmerkmal gelangt der wenigstens eine Schmierkopf bzw. dessen Schmierstoffaustrittskörper dabei nach Abschluss des Schmiervorganges aus der Öffnungsstellung zurück in eine Ausgangsstellung; dadurch wird das dem Schmierstoffverteiler zugeordnete Einlassventil bzw. Druckentlastungsventil betätigt und bei Beginn des nächsten Schmiervorganges steht der volle Schmierstoffdruck an dem wenigstens einem Schmierkopf wieder an.

Für die Verwirklichung der Heranführung des wenigstens einen Schmierkopfes an die betreffende Schmierstelle können Schmierkopf und Mitnehmer, vorzugsweise gemeinsam, mittels Parallellenkern an einer Befestigungsplatte schwenkbar gelagert sein, wie dies an sich bekannt ist.

Um eine möglichst geringe mechanische Beanspruchung der Versorgungsleitungen zu gewährleisten, ist gemäß einem weitem fakultativen Erfindungsmerkmal der Schmierstoffverteiler zusammen mit dem wenigstens einen Schmierkopf bewegbar, insbesondere verschwenkbar.

Die zwei oder mehrere Mundstücke können entsprechend den Abständen der zu versorgenden Schmierstellen an ein und demselben Schmierstoffaustrittskörper unterschiedliche seitliche Abstände von dem Mitnehmer haben, oder an gesonderten Schmierstoffaustrittskörpern in entsprechend unterschiedlichen Abständen an einem oder mehreren Schmierköpfen vorgesehen sein.

Weitere Ziele, Merkmale, Vorteile und Anwendungsmöglichkeiten der Erfindung ergeben sich aus der nachfolgenden Beschreibung von Ausführungsbeispielen anhand der Zeichnung.

Es zeigen:
- Fig. 1: schematisch eine die Erfindung aufweisende Abschmiereinrichtung,
- Fig. 2: ein Funktionsschema einer Abschmiereinrichtung für ein Ausführungsbeispiel der Erfindung mit einem Progressivverteiler, und
- Fig. 3: ein Funktionsschema entsprechend Fig. 2 für ein anderes Ausführungsbeispiel mit einem Einleitungsverteiler.

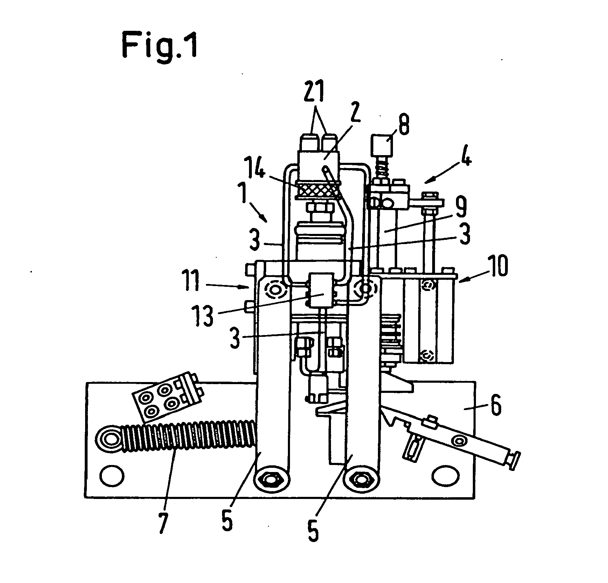

Die in Fig. 1 dargestellte Einrichtung dient dem Abschmieren wandernder Schmierstellen, wie sie z.B. beim Betrieb eines Rollen- oder Kettenbandes vorhanden sind. Die Abschmiereinrichtung weist einen Schmierkopf 1 auf, welcher aus einer zurückgezogenen Ausgangsruhelage in eine vorgeschobene Arbeitslage bewegbar ist, in welch letzterer der Schmierkopf 1 dichtend an mindestens einer (nicht dargestellten) Schmierstelle anliegt. Wie dies im Einzelnen geschehen kann, ist in der DE 203 12 833 U1 näher beschrieben. Dabei ist der Schmierkopf 1 mittels eines Mitnehmers 4, welcher in das zu schmierende Rollen- oder Kettenband eingreifen kann, aus der zurückgezogenen Ausgangsruhelage in die (dargestellte) vorgeschobene Arbeitslage überführbar, in welcher der betreffenden Schmierstelle Schmierstoff zugeführt werden kann. Schmierkopf 1 und Mitnehmer 4 sind gemeinsam mittels Parallellenkern 5 an einer Befestigungsplatte 6 gegen die Wirkung einer Rückstellfeder 7 schwenkbar gelagert. Der Mitnehmer 4 hat einen Mitnehmerkopf 8 am vorderen Ende eines Mitnehmerkopfträgers 9, welcher mittels einer Kolben/Zylinder-Anordnung 10 parallel zu diesem Schmierkopfhalter 11 und relativ zu diesem nach vorne und zurück verschiebbar ist, so dass der Mitnehmerkopf 8 in die richtige Eingriffsposition an dem vorbeilaufenden Rollen- oder Kettenband gebracht werden kann.

Der Schmierkopf 1 hat einen Schmierstoffaustrittskörper 2, an welchem in dem dargestellten Fall nebeneinander drei Mundstücke 21 vorgesehen sind, von welchen zeichnerisch nur zwei zu sehen sind. Zu den einzelnen Mundstücken 21 führt jeweils eine Versorgungsleitung 3, wobei zunächst ein gemeinsamer Versorgungsleitungsabschnitt in einen Schmierstoffverteiler 13 mündet, von welchem die jeweiligen weiteren Versorgungsleitungsabschnitte zu dem Schmierstoffaustrittskörper 2 geführt sind, um in den jeweiligen Mundstücken 21 zu münden. Der Schmierstoffverteiler 13 ist an dem Schmierkopfhalter 11 befestigt und so mit Hilfe der Parallellenker 5 gemeinsam mit dem Schmierkopf 1 verschwenkbar. Wenn der Schmierstoffverteiler 13 z.B. als Progressiwerteiler 13a ausgebildet ist, können den einzelnen Mundstücken 21 in vorgegebenen, auch unterschiedlichen zeitlichen Abständen jeweils, auch unterschiedliche Schmierstoffmengen zugeführt werden. Auf diese Weise ist eine individuelle Schmierstoffversorgung unterschiedlicher Schmierstellen an einem Rollen- oder Kettenband zeitsparend möglich, wenn die jeweiligen Schmierstellen unterschiedlichen Abstand von dem Eingriffspunkt des Mitnehmerkopfes 8 an dem Rollen- oder Kettenband haben.

Um unterschiedliche Abstände der vorbeilaufenden Schmierstellen von der Abschmiereinrichtung ausgleichen zu können, ist der Schmierstoffaustrittskörper 2 des Schmierkopfes 1 über einen Gummipuffer 14 an dem Schmierkopfhalter 11 angebracht.

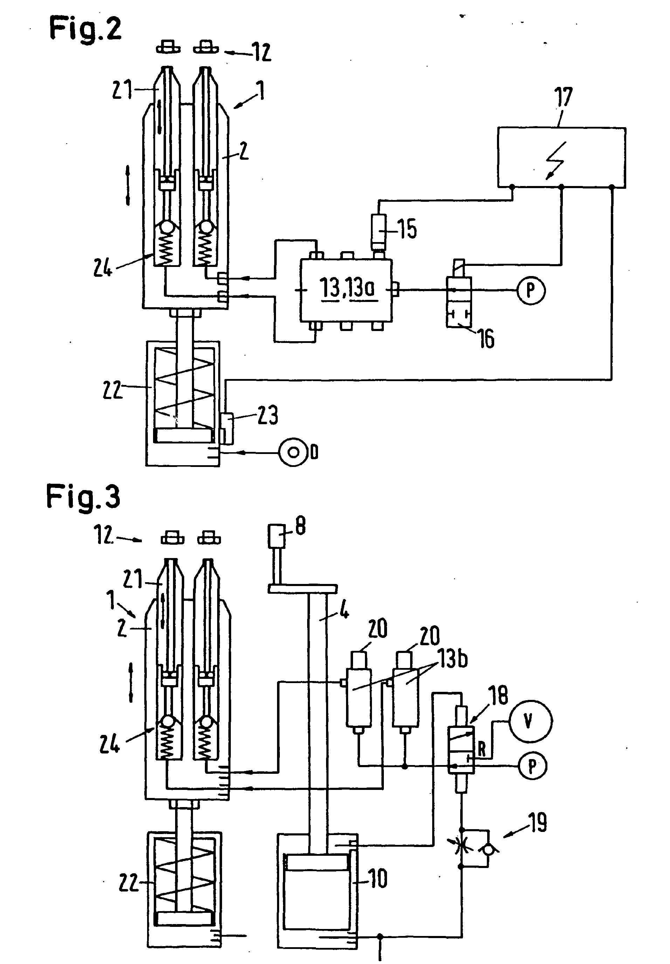

Bei dem in Fig. 2 dargestellten Funktionsschema wird der wenigstens eine Schmierkopf 1, im dargestellten Fall mit zwei - Schmiernippel 12 aufweisenden - Mundstücken 21 ausgestattet, mit Schmierstoff beschickt. Dem Progressiwerteiler 13a ist ein als hydraulisches Magnetventil ausgebildetes Einlassventil 16 vorgeschaltet, welchem seine Öffnungszeit von einer Steuereinheit 17 vorgegeben wird. Die Steuereinheit 17 ihrerseits ist abhängig von den Impulsen des ersten Sensors 15 an dem Progressiwerteiler 13a. Die an der Steuereinheit 17 einstellbare Anzahl der Impulse gibt die Fördermenge vor. Durch entsprechende Anschlussmöglichkeiten an dem Progressiwerteiler 13a bzw. den Einsatz von dosierbaren Verteilern können an mehreren Schmierköpfen 1 und/oder mehreren Mundstücken 21 unterschiedliche Schmierstoffmengen abgegeben werden.

Bei dem in Fig. 2 dargestellten Funktionsbeispiel wird der Schmierkopf 1 gegen ein Austrittsventil 24 gedrückt, wenn es öffnen und den Schmierstoff an die Schmierstelle abgeben soll. Der Progressivverteiler 13a arbeitet, bis die an der Steuereinheit 17 eingestellte Impulszahl abgelaufen ist. Das in der Pausenzeit geöffnete Einlassventil 16 schließt und der Progressiwerteiler 13a kommt zum Stillstand. Ist der Schmiervorgang abgeschlossen, geht der Schmierkopf 1 mit Hilfe einer pneumatischen Kolben/Zylinder-Anordnung 22 zurück in seine Ausgangsstellung, während das Austrittsventil 24 sofort wieder schließt. Ein zweiter Sensor 23 an der Kolben/Zylinder-Anordnung 22 signalisiert dem Einlassventil 16 zu öffnen. Dann steht der volle Pumpendruck wieder an dem Einlassventil 24 an, um bei dem nächsten Schmiervorgang möglichst schnelle die Schmierstelle zu versorgen.

Bei dem in Fig. 3 dargestellten Funktionsbeispiel wird der Schmierkopf 1 mit den Mundstücken 21 von zwei Einleitungsverteilern 13b mit Schmierstoff aus einem Schmierstoffvorrat V mittels einer Pumpe P beschickt. Die Einleitungsverteiler 13b erhalten den Schmierstoff von der Pumpe P über ein Entlastungsventil 18. Die Fördermenge ist an den Einleitungsverteilern 13b individuell einstellbar. Die Einleitungsverteiler 13b sind mit einer in diesem Fall als Kontrollstifte 20 ausgebildeten Anzeigeeinrichtung ausgestattet, welche den Funktionszustand der Einleitungsverteiler 13b anzeigt. Die vollständig herausgefahrenen Kontrollstifte 20 zeigen an, dass die Einleitungsverteiler 13b unter Druck stehen, d.h. geladen sind.

Auch hier wird bzw. werden zur Abgabe des Schmierstoffes der Schmierkopf 1 bzw. dessen Mundstücke 21 gegen ein Einlassventil 24 gedrückt, damit dieses öffnet und den Schmierstoff freigibt. Der jeweilige unter Druck stehende Einleitungsverteiler 13b gibt die eingestellte Fördermenge an die Schmierstelle ab. Geht der Mitnehmer 4 mittels der pneumatischen Kolben/Zylinder-Anordnung 10 zurück, so wird gleichzeitig der Pumpendruck über das Entlastungsventil 18 entlastet. Der Mitnehmer 4 fährt nur kurzzeitig zurück und geht dann wieder in seine Bereitstellung. Aufgrund dessen wird über eine Drossel oder Zeitverzögerung 19 die Entlastungszeit verlängert. Danach wird der Einleitungsverteiler 13b für den nächsten Schmiervorgang wieder aufgeladen.

### Bezugszeichenliste

- 1: Schmierkopf
- 2: Schmierstoffaustrittskörper
- 3: Versorgungsleitungen
- 4: Mitnehmer
- 5: Parallellenker
- 6: Befestigungsplatte
- 7: Rückstellfeder
- 8: Mitnehmerkopf
- 9: Mitnehmerkopfträger
- 10: pneumatische Kolben/Zylinder-Anordnung
- 11: Schmierkopfhalter
- 12: Schmiernippel
- 13: Schmierstoffverteiler
- 13a: Progressiwerteiler
- 13b: Einleitungsverteiler
- 14: Gummipuffer
- 15: erster Sensor
- 16: Einlassventil
- 17: Steuereinheit
- 18: Entlastungsventil
- 19: Drossel/Zeitverzögerung
- 20: Kontrollstifte
- 21: Mundstück
- 22: pneumatische Kolben/Zylinder-Anordnung
- 23: zweiter Sensor
- 24: Austrittsventil

- D: Druckluft
- P: Pumpe
- V: Schmierstoffvorrat

## Patentansprüche

1. Einrichtung zum Abschmieren wandernde Schmierstellen an einem Rollen- oder Kettenband, bei welcher wenigstens ein Schmierkopf (1) aus einer zurückgezogenen Ausgangsruhelage in eine vorgeschobene Arbeitslage bewegbar ist, in welch letzterer der Schmierkopf (1) dichtend an mindestens einer Schmierstelle zur Abgabe von Schmierstoff in Anlage bringbar ist, wobei wenigstens ein Schmierkopf (1) zwei oder mehrere Schmierstoffaustrittsöffnungen bildende Mundstücke (21) für die gleichzeitige oder zeitlich versetzte Versorgung von zwei oder mehreren Schmierstellen mit Schmierstoff aufweist, **dadurch gekennzeichnet, dass** der wenigstens eine Schmierkopf (1) über einen Schmierstoffverteiler (13) mit dem Schmierstoffvorrat (V) verbunden ist.

2. Einrichtung nach Anspruch 1, **dadurch gekennzeichnet, dass** der wenigstens eine Schmierkopf (1) über wenigstens einen Einleitungsverteiler (13b) mit dem Schmierstoffvorrat (V) verbunden ist.

3. Einrichtung nach Anspruch 1 oder 2, **dadurch gekennzeichnet, dass** der wenigstens eine Schmierkopf (1) über einen Progressivverteiler (13a) mit dem Schmierstoffvorrat (V) verbunden ist.

4. Einrichtung nach Anspruch 1, 2 oder 3, **dadurch gekennzeichnet, dass** die Mundstücke (21) nebeneinander an einem gemeinsamen Schmierstoffaustrittskörper (2) des wenigstens einen Schmierkopfes (1) vorgesehen sind.

5. Einrichtung nach einem der vorhergehenden Ansprüche, **dadurch gekennzeichnet, dass** der wenigstens eine Schmierkopf (1) und/oder der jeweilige Schmierstoffaustrittskörper (2), z.B. mittels Gummipuffer (14) oder dgl., schwenkbar nachgiebig an einem. Schmierkopfhalter (11), vorzugsweise austauschbar, gehalten sind/ist.

6. Einrichtung nach einem der vorhergehenden Ansprüche, **dadurch gekennzeichnet, dass** der wenigstens eine Schmierkopf (1) mittels eines Mitnehmers (4), welcher in das zu schmierende Rollen- oder Kettenband eingreifen kann, aus der zurückgezogenen Ausgangsruhelage in eine vorgeschobene Arbeitslage überführbar ist.

7. Einrichtung nach einem der vorhergehenden Ansprüche, **dadurch gekennzeichnet, dass** dem ggf. dosierbaren, z.B. als Progressivverteiler (13a) ausgebildeten Schmierstoffverteiler (13) ein erster Sensor (15) und ein z.B. als hydraulisches Magnetventil ausgebildetes Einlassventil (16) zugeordnet sind, welchem seine Öffnungszeit von einer Steuereinheit (17) vorgegeben wird, welche ihrerseits als Maß für die Schmierstofffördermenge von den Impulsen des ersten Sensors (15) beaufschlagt wird und an welcher eine vorgegebene Impulszahl einstellbar ist.

8. Einrichtung nach Anspruch 2, **dadurch gekennzeichnet, dass** der wenigstens eine Einleitungsverteiler (13b) über ein ggf, gemeinsam gesteuertes Entlastungsventil (18) an die Schmierstoffpumpe (P) angeschlossen ist.

9. Einrichtung nach Ansprüche 6 und 8, **dadurch gekennzeichnet, dass** beim kurzzeitigen Zurückfahren des Mitnehmers (4) der Pumpendruck aufgrund des dem wenigstens einen Einleitungsverteiler (13b) zugeordneten Entlastungsventils (18) abfällt und bei Wiedererreichen der Bereitschaftsstellung des Mitnehmers (4) nach einer ggf. über eine Drossel oder Zeitverzögerung (19) verlängerten Entlastungszeit der wenigstens eine Einleitungsverteiler (13b) für den nächsten Schmiervorgang wieder aufgeladen ist.

10. Einrichtung nach Anspruch 2, **dadurch gekennzeichnet, dass** die Schmierstofffördermenge an dem wenigstens einen Einleitungsverteiler (13b) individuell einstellbar ist.

11. Einrichtung nach Anspruch 2, **dadurch gekennzeichnet, dass** der wenigstens eine Einleitungsverteiler (13b) eine Kontrolleinrichtung, z.B. einen Kontrollstift (20) oder ein Kontrollsignal, aufweist, welche dessen Funktion optisch oder elektrisch anzeigt.

12. Einrichtung nach einem der Ansprüche 1 bis 11, **dadurch gekennzeichnet, dass** der wenigstens eine Schmierkopf (1) bzw. dessen Schmierstoffaustrittskörper (2), ggf. mechanisch, an ein Austrittsventil andrückbar ist, weiches **dadurch** öffnet und den Schmierstoff an die Schmierstelle freigibt.

13. Einrichtung nach Ansprüche 7 oder 8 und 12, **dadurch gekennzeichnet, dass** der wenigstens eine Schmierkopf (1) bzw, dessen Schmierstoffaustrittskörper (2) nach Abschluss des Schmiervorganges aus der Öffnungsstellung zurück in eine Ausgangsstellung gelangt und **dadurch** das dem Schmierstoffverteiler (13) zugeordnete Einlassventil (16) bzw. Druckentlastungsventil (18) betätigt, und dass bei Beginn des nächsten Schmiervorganges der volle Schmierstoffdruck an dem wenigstens einen Schmierkopf (1) ansteht.

14. Einrichtung nach einem der Ansprüche 6 bis 13, **dadurch gekennzeichnet, dass** Schmierkopf (1) und Mitnehmer (4), vorzugsweise gemeinsam, mittels Parallellenkern (5) an einer Befestigungsplatte (6) schwenkbar gelagert sind.

15. Einrichtung nach einem der vorhergehenden Ansprüche, **dadurch gekennzeichnet, dass** der Schmierstoffverteiler (13) zusammen mit dem wenigstens einen Schmierkopf (1) bewegbar, insbesondere verschwenkbar ist.

16. Einrichtung nach einem der Ansprüche 6 bis 15, **dadurch gekennzeichnet, dass** die zwei oder mehreren Mundstücke (21) entsprechend dem Abstand der zu versorgenden Schmierstellen unterschiedlichen seitlichen Abstand von dem Mitnehmer (4) haben.

17. Einrichtung nach einem der vorhergehenden Ansprüche, **dadurch gekennzeichnet, dass** jedem Mundstück (21) ein über ein Entlastungsventil (18) an die Schmierstoffpumpe (P) angeschlosser Einleitungsverteiler (13b) zugeordnet ist.

18. Einrichtung nach Anspruch 17, **dadurch gekennzeichnet, dass** die Schmierstoffördermenge an den Einleitungsverteilem (13b) individuell einstellbar ist.

## Claims

1. A device for the lubrication of moving lubricating points on a roller or chain conveyor, in which at least one lubricating head (1) can be moved from an initial retracted resting position into an advanced working position in which the lubricating head (1) can be brought into close contact with at least one lubricating point for the delivery of lubricant, at least one lubricating head (1) having two or more nozzles (21) forming lubricant outlets for the simultaneous or time-staggered supply of lubricant to two or more lubricating points, **characterized in that** the at least one lubricating head (1) is connected to the lubricant supply (V) via a lubricant distributor (13).

2. A device according to Claim 1, **characterized in that** the at least one lubricating head (1) is connected to the lubricant supply (V) via at least one single-line distributor (13b).

3. A device according to Claim 1 or 2, **characterized in that** the at least one lubricating head (1) is connected to the lubricant supply (V) via a progressive distributor (13a).

4. A device according to Claim 1, 2 or 3, **characterized in that** the nozzles (21) are provided side by side on a common lubricant outlet body (2) of the at least one lubricating head (1).

5. A device according to one of the preceding claims, **characterized in that** the at least one lubricating head (1) and/or respective lubricant outlet body (2) are/is held, e.g. by means of rubber buffers (14) or the like, so as to be capable of swivelling flexibly on a lubricating-head holder (11), and are/is preferably exchangeable.

6. A device according to one of the preceding claims, **characterized in that** the at least one lubricating head (1) is movable from the initial retracted resting position into an advanced working position by means of a carrier (4) which can engage in the roller or chain conveyor to be lubricated.

7. A device according to one of the preceding claims, **characterized in that** associated with the possibly dosable lubricant distributor (13), taking the form of a progressive distributor (13a) for example, are a first sensor (15) and an inlet valve (16) in the form of for example a hydraulic solenoid valve, the valve open time being determined by a control unit (17) which, for its part, is acted on by the pulses of the first sensor (15) as a measure of the quantity of lubricant to be delivered and it being possible to preset a given number of pulses at said control unit (17).

8. A device according to Claim 2, **characterized in that** the at least one single-line distributor (13b) is connected to the lubricant pump (P) via a possibly jointly controlled pressure-relief valve (18).

9. A device according to Claims 6 and 8, **characterized in that** upon the brief return of the carrier (4), the pump pressure drops on account of the pressure-relief valve (18) assigned to the at least one single-line distributor (13b), and upon the carrier (4) again reaching the working position after a pressure-relief time which has possibly been extended via a throttle or time delay (19), the at least one single-line distributor (13b) is again charged for the next lubricating process.

10. A device according to Claim 2, **characterized in that** the quantity of lubricant to be delivered can be individually regulated at the at least one single-line distributor (13b).

11. A device according to Claim 2, **characterized in that** the at least one single-line distributor (13b) has an indicator facility, for example an indicator pin (20) or indicator signal, which visually or electrically indicates its operational status.

12. A device according to one of Claims 1 to 11, **characterized in that** the at least one lubricating head (1) or its lubricant outlet body (2) can be pressed, possibly by mechanical means, against an outlet valve, which opens as a result and releases the lubricant to the lubricating point.

13. A device according to Claims 7 or 8 and 12, **characterized in that** at the end of the lubricating process, the at least one lubricating head (1) or its lubricant outlet body (2) moves from the open position back into a starting or initial position and thus operates the inlet valve (16) or pressure-relief valve (18) assigned to the lubricant distributor (13), **and in that** at the beginning of the next lubricating process, the full lubricant pressure is available at the at least one lubricating head (1).

14. A device according to one of Claims 6 to 13, **characterized in that** lubricating head (1) and carrier (4) are swivel-mounted, preferably together, by means of parallel rods (5) on a fastening plate (6).

15. A device according to one of the preceding claims, **characterized in that** the lubricant distributor (13) can move, and in particular can swivel, together with the at least one lubricating head (1).

16. A device according to one of Claims 6 to 15, **characterized in that** the two or more nozzles (21) are at varying lateral distances from the carrier (4) in accordance with the distance between the lubricating points to be supplied with lubricant.

17. A device according to one of the preceding claims, **characterized in that** a single-line distributor (13b) connected to the lubricant pump (P) via a pressure-relief valve (18) is assigned to each nozzle (21).

18. A device according to Claim 17, **characterized in that** the quantity of lubricant to be delivered can be individually regulated at the single-line distributors (13b).

## Revendications

1. Dispositif pour lubrifier des points de lubrification mobiles sur une bande à rouleaux ou à chaînes, dans lequel au moins une tête de lubrification (1) peut être déplacée d'une position de repos de départ en retrait dans une position de travail avancée dans laquelle la tête de lubrification (1) peut être amenée en appui de façon étanche contre au moins un point de lubrification en vue de dispenser du lubrifiant, au moins une tête de lubrification (1) présentant deux ou plusieurs gicleurs (21) formant des ouvertures de sortie pour le lubrifiant pour l'alimentation simultanée ou retardée en lubrifiant de deux ou plusieurs points de lubrification, **caractérisé en ce que** la au moins une tête de lubrification (1) est reliée au réservoir de lubrifiant (V) par l'intermédiaire d'un distributeur de lubrifiant (13).

2. Dispositif selon la revendication 1, **caractérisé en ce que** la au moins une tête de lubrification (1) est reliée au réservoir de lubrifiant (V) par l'intermédiaire d'au moins un distributeur à ligne simple (13b).

3. Dispositif selon la revendication 1 ou 2, **caractérisé en ce que** la au moins une tête de lubrification (1) est reliée au réservoir de lubrifiant (V) par l'intermédiaire d'un distributeur progressif (13a).

4. Dispositif selon la revendication 1, 2 ou 3, **caractérisé en ce que** les gicleurs (21) sont prévus les uns à côté des autres sur un corps de sortie de lubrifiant (2) commun de la au moins une tête de lubrification (1).

5. Dispositif selon l'une des revendications précédentes, **caractérisé en ce que** la au moins une tête de lubrification (1) et/ou le corps de sortie de lubrifiant (2) correspondant est/sont maintenu(s) en pouvant céder par basculement, par exemple au moyen de tampons en caoutchouc (14) ou des dispositifs similaires, sur un support de tête de lubrification (11), en étant de préférence échangeables.

6. Dispositif selon l'une des revendications précédentes, **caractérisé en ce que** la au moins une tête de lubrification (1) peut être déplacée de la position de repos de départ en retrait dans une position de travail avancée au moyen d'un entraîneur (4) qui peut s'engrener dans la bande à rouleaux ou à chaînes à lubrifier.

7. Dispositif selon l'une des revendications précédentes, **caractérisé en ce qu'**un premier capteur (15) et une valve d'entrée (16), réalisée par exemple sous la forme d'une valve magnétique hydraulique, sont associés au distributeur de lubrifiant (13) le cas échéant réglable, conçu par exemple sous la forme d'un distributeur progressif (13a), la durée d'ouverture de laquelle valve d'entrée étant prédéfinie par une unité de contrôle (17) qui de son côté reçoit les impulsions du premier capteur (15) comme mesure pour la quantité de lubrifiant à dispenser et dans laquelle un nombre d'impulsions données peut être réglée.

8. Dispositif selon la revendication 2, **caractérisé en ce que** le au moins un distributeur à ligne simple (13b) est raccordé à la pompe de lubrifiant (P) par l'intermédiaire d'une valve de déchargement (18) le cas échéant commandée de façon commune.

9. Dispositif selon les revendications 6 et 8, **caractérisé en ce qu'**après un bref retrait de l'entraîneur (4), la pression de la pompe est diminuée en raison de la valve de déchargement (18) associée au au moins un distributeur à ligne simple (13b) et est rechargée pour le processus de lubrification suivant après retour dans la position de fonctionnement de l'entraîneur (4) après une durée de déchargement le cas échéant ralentie par un étranglement ou un retard temporel (19) du au moins un distributeur à ligne simple (13b).

10. Dispositif selon la revendication 2, **caractérisé en ce que** la quantité de lubrifiant dispensée au au moins un distributeur à ligne simple (13b) est réglable individuellement.

11. Dispositif selon la revendication 2, **caractérisé en ce que** le au moins un distributeur à ligne simple (13b) est muni d'un dispositif de contrôle, par exemple une broche de contrôle (20) ou un signal de contrôle, lequel affiche sa fonction de façon optique ou électrique.

12. Dispositif selon l'une des revendications 1 à 11, **caractérisé en ce que** la au moins une tête de lubrification (1) ou son corps de sortie de lubrifiant (2) respectivement peut être pressé sur une valve de sortie, le cas échéant par voie mécanique, laquelle valve est ainsi ouverte et libère le lubrifiant au point de lubrification.

13. Dispositif selon les revendications 7 ou 8 et 12, **caractérisé en ce qu'**après achèvement du processus de lubrification, la au moins une tête de lubrification (1) ou son corps de sortie de lubrifiant (2) respectivement retourne de la position ouverte dans une position de départ et ainsi actionne la valve d'entrée (16) associée au distributeur de lubrifiant (13) ou la valve de déchargement (18), et **en ce qu'**au début du processus de lubrification suivant, il règne dans la au moins une tête de lubrification (1) la pression de lubrification totale.

14. Dispositif selon l'une des revendications 6 à 13, **caractérisé en ce que** la tête de lubrification (1) et l'entraîneur (4) sont logés de façon à pouvoir basculer sur une plaque de fixation (6), de préférence ensemble, à l'aide de noyaux parallèles (5).

15. Dispositif selon d'une des revendications précédentes, **caractérisé en ce que** le distributeur de lubrifiant (13) peut être déplacé, notamment basculé, en même temps que la au moins une tête de lubrification (1).

16. Dispositif selon l'une des revendications 6 à 15, **caractérisé en ce que** les deux ou plusieurs gicleurs (21) présentent des distances latérales avec l'entraîneur (4) différentes correspondant à la distance des points de lubrification à alimenter.

17. Dispositif selon l'une des revendications précédentes, **caractérisé en ce qu'**à chaque gicleur (21) est associé un distributeur à ligne simple (13b) raccordé à la pompe de lubrifiant (P) par l'intermédiaire d'une valve de déchargement (18).

18. Dispositif selon la revendication 17, **caractérisé en ce que** la quantité de lubrifiant dispenser au distributeur à ligne simple (13b) est réglable individuellement.
